# DEMANDE DE BREVET EUROPEEN

(11) **EP 4 786 287 A2**
(43) Date de publication de la demande: **05.08.2026**
(21) Numéro de dépôt: 26153372.3
(22) Date de dépôt: 22.01.2026
(51) Int. Cl.: B60S 3/04

(54) **INSTALLATION DE LAVAGE DE VÉHICULES**

(30) Priorité: 30.01.2025 FR 2500948
(71) Demandeur: Financière Clairac, 75016 Paris (FR)
(72) Inventeur: LEBHERTZ, Cédric, 67000 STRASBOURG (FR)
(74) Mandataire: Cabinet Bleger-Rhein-Poupon

(57) **Abrégé**

Installation de lavage de véhicules (V) comportant au moins une piste de lavage (1) prévue pour recevoir un véhicule (V) et équipée d'au moins un coffret (3) présentant une interface utilisateur comportant des moyens de sélection d'un ou plusieurs programmes de lavage prédéterminés et des moyens de paiement de la prestation consistant en la mise en œuvre d'au moins un programme de lavage, chaque piste de lavage (1) présentant par ailleurs des moyens de lavage manuels du véhicule par l'utilisateur sous forme d'au moins une lance de lavage (5, 6) manipulable par l'utilisateur et délivrant un fluide sous pression, l'utilisateur se déplaçant autour du véhicule (V) en portant une lance (5, 6) qu'il dirige vers le véhicule (V). L'installation comporte en outre des moyens de gestion électronique au moins des moyens de sélection du programme de lavage, des moyens de paiements et des moyens de lavage. Chaque piste (1) comporte des moyens d'information du positionnement que doit prendre l'utilisateur à chaque instant pour réaliser le programme de lavage complet sélectionné.

## Description

L'invention a trait au domaine des installations de lavage de véhicule sous pression, comportant à cet effet des pistes de lavage équipées d'au moins une lance manipulée par l'utilisateur et délivrant un fluide sous pression en vue de nettoyer le véhicule. Il s'agit donc d'installations de lavage manuel, dans lesquelles l'utilisateur joue un rôle central dans l'opération de lavage de son véhicule, dont il est directement chargé. L'efficacité du lavage dépend alors largement de son comportement et de son usage des outils disponibles, et notamment de sa compréhension du fonctionnement correct desdits outils.

Les pistes sont équipées d'un coffret comportant des moyens de paiement ainsi qu'un ou plusieurs organes de sélection de différentes phases ou étapes utiles pour réaliser un lavage complet, ce qui implique des possibilités de choix pour l'utilisateur. Celui-ci dispose de fait d'une latitude pour adapter le nettoyage à son véhicule et à son état de saleté. Ainsi, un cycle de lavage complet, tel que proposé par ces installations, comporte différentes étapes pouvant par exemple aller du prélavage à un rinçage, voire à des étapes de finition procurant une brillance et supprimant les traces résiduelles de lavage, en passant évidemment par le lavage proprement dit s'effectuant par injection sous pression d'un liquide mélangé avec du détergent. Un organe de sélection, par exemple un bouton rotatif placé sur le coffret, permet à l'utilisateur de passer de l'une à l'autre de ces étapes, avec possibilité éventuelle de sauter une ou plusieurs étapes qui ne lui semble(nt) pas ou moins adaptée(s) à l'état de saleté de son véhicule. Cette gestion des phases de lavage s'effectue de plus dans une durée totale impartie qui correspond à un montant financier réglé initialement (qu'il est toujours possible d'abonder), et qui suscite par conséquent des arbitrages sur le temps à passer dans chaque étape.

Ce mode de fonctionnement présente en pratique de nombreuses limitations, en particulier parce que la liberté dont dispose l'utilisateur se traduit bien souvent par un mauvais usage des outils, du temps, des potentialités techniques des étapes, etc. Le placement par rapport au véhicule, la manière de manipuler la lance, les parties du véhicule qui doivent plus particulièrement être traitées, les phases d'un lavage correct qui sont indispensables, etc. sont autant de paramètres laissés à sa libre appréciation et dont la maîtrise est pourtant essentielle dans la perspective d'un lavage efficient. En réalité, la nécessité de gérer de nombreuses données sans avoir de connaissances spécifiques conduit dans nombre de cas à des usages approximatifs à la fois du matériel et des possibilités offertes par ces stations de lavage. Il arrive bien souvent que, par manque de temps, l'utilisateur se précipite lors de phases qui sont pourtant essentielles à un nettoyage correct alors qu'il a passé trop de temps sur une phase que les professionnels considèrent comme plus secondaire. Le résultat est un lavage du véhicule qui est loin d'être optimal. En d'autres termes, à l'issue de l'opération de lavage, en dépit de toute la bonne volonté de l'utilisateur, la propreté du véhicule n'est nullement garantie en sortie de l'installation.

C'est la raison pour laquelle le postulat qui est à la base de la présente invention consiste à renverser l'approche développée ci-dessus, pour promouvoir un accompagnement bien plus précis des utilisateurs, de manière à rendre l'opération de lavage beaucoup plus aboutie, en termes de résultat, et aussi plus confortable. En fait, dans cette nouvelle approche, l'usager est guidé de manière précise, car il fait non seulement le choix d'un programme de lavage complet particulier, mais également parce qu'il y est accompagné à chaque étape du lavage. Cette vision innovante conduit d'abord à augmenter notablement son confort d'utilisation, puisqu'il sait comment opérer à chaque instant du cycle de lavage. Elle procure de plus nombre d'avantages techniques, d'abord en termes de qualité de nettoyage de son véhicule mais également dans la maîtrise des paramètres de lavage. Cette dernière induit de multiples conséquences économiques, écologiques, etc. comme on le verra plus en détail dans la suite.

L'invention place en fait l'utilisateur dans un rôle simplifié d'opérateur du lavage de son propre véhicule, certes porteur de la lance de lavage et qui espère le meilleur résultat, mais qui n'a pas les connaissances techniques de l'exploitant des stations de lavage et doit être guidé pour aboutir au résultat optimal.

A ces effets, l'installation de lavage de véhicules de la présente invention comporte classiquement les éléments connus développés ci-après, sur au moins une piste de lavage prévue pour recevoir un véhicule. Ladite piste est équipée d'au moins un coffret présentant une interface utilisateur comportant des moyens de sélection d'un ou plusieurs programmes de lavage prédéterminés et des moyens de paiement de la prestation consistant en la mise en oeuvre d'au moins un programme de lavage. Chaque piste de lavage présente par ailleurs des moyens de lavage manuels du véhicule par l'utilisateur sous forme d'au moins une lance de lavage manipulable par l'utilisateur et délivrant un fluide sous pression, l'utilisateur se déplaçant autour du véhicule en portant une lance qu'il dirige vers le véhicule. L'installation comporte en outre des moyens de gestion électronique au moins des moyens de sélection du programme de lavage, des moyens de paiements et des moyens de lavage. Il s'agit là des équipements classiques d'une station de lavage de véhicules, qui permettent la mise en œuvre des prestations de lavage offertes.

Pour répondre aux objectifs de confort d'utilisation et d'accompagnement des utilisateurs tracés auparavant, selon l'invention, chaque piste comporte des moyens d'information du positionnement que doit prendre l'utilisateur, prévus pour le guider à chaque instant pour réaliser le programme de lavage complet sélectionné.

Ces moyens d'information sont prévus pour guider l'utilisateur pendant toute la durée du programme de lavage qu'il a choisi, l'assister dans son déplacement autour du véhicule en lui assignant des positionnements qui correspondent au double objectif de réaliser la totalité du programme de lavage choisi, et de le réaliser de sorte que chaque étape soit opérée qualitativement, en termes de temps passé et de localisation appropriée à l'étape en cours. En somme, l'invention garantit que le véhicule sort propre de l'installation, puisque toutes les étapes de lavage auront été déroulées correctement. Ces étapes sont toutes accomplies en une durée globale permettant de rentabiliser chaque instant passé à nettoyer le véhicule, en éliminant les temps morts et en se concentrant sur les opérations successives constituant le lavage global du véhicule.

Il est à noter que le choix d'un programme de lavage prédéterminé conduit de plus à maîtriser la quantité de fluide sous pression utilisée au cours du lavage complet du véhicule, avec des incidences écologiques évidentes, appréciables dans une ère de changement climatique qui voit les périodes de sècheresse augmenter en durée et en fréquence. Il est ainsi possible de garantir la consommation d'une quantité connue et précise de liquide. Aussi, cette gestion précise des flux de fluide que permet la mise en œuvre d'un programme prédéterminé aboutit à une meilleure maîtrise des paramètres économiques propres à la station de lavage. Enfin, dans une perspective de gestion des flux d'utilisateurs, elle permet de mieux prévoir les disponibilités à venir des pistes de lavage, et les temps d'attente correspondants, puisque le choix de programmes prédéterminés permet une meilleure gestion des durées passées par les utilisateurs individuels sur les pistes. La pluralité des programmes proposés aboutit à des différences en termes de durée et de coût de prestation, et le contrôle des programmes en cours sur les pistes permet la gestion des files d'attente, et ainsi de mieux informer les usagers sur leurs temps d'attente respectifs.

Selon une possibilité, les moyens d'information du positionnement de l'utilisateur sont des dispositifs lumineux répartis en périphérie du véhicule, reliés aux moyens de gestion électronique qui les pilotent unitairement. Ces dispositifs lumineux matérialisent le trajet que doit suivre l'utilisateur en signalant à chaque instant l'emplacement que doit rejoindre et prendre l'utilisateur par rapport à la voiture, et ils restent allumés, à cet emplacement, pour la durée nécessaire à l'opération à effectuer audit emplacement. A cet effet, les dispositifs lumineux forment par exemple un trajet autour du véhicule, qui peuvent montrer à mesure qu'ils s'allument le trajet que doit emprunter l'utilisateur pour se rendre au bon endroit.

De préférence, les dispositifs lumineux sont implantés dans le sol de la piste de lavage Cela facilite le positionnement de l'usager, qui n'a qu'à rejoindre le dispositif allumé et se positionner dessus en sachant très précisément que c'est cet endroit que lui assigne, à ce moment, le programme en cours. Selon une configuration possible, les dispositifs lumineux dessinent dans le sol une forme rectangulaire continue divisée en segments lumineux distincts. Il ne s'agit là que d'un exemple de configuration de signalisation lumineuse adaptée à l'invention, qui peut cependant prendre d'autres formes.

Alternativement ou en complément, les moyens d'informations du positionnement de l'utilisateur prévus par l'invention peuvent être des moyens sonores, lesquels peuvent par exemple comporter un générateur vocal. Celui-ci peut indiquer verbalement les positions à occuper autour du véhicule, mais également donner d'autres indications, comme des temps de pause, la manière de tenir la lance et de la déplacer, son sens de déplacement, etc. Comme pour les informations lumineuses, les informations sonores ont pour objectif de mettre l'utilisateur en situation de concourir à chaque instant à l'obtention d'un résultat de lavage optimal pour son véhicule, en lui fournissant des repères spatio-temporels garantissant la bonne réalisation du programme.

Le résultat final obtenu peut être souligné, chaque piste pouvant comporter à cet effet des moyens d'illumination de l'ensemble du véhicule. Cela permet de magnifier l'opération, de montrer à l'utilisateur que la promesse initiale d'une garantie de propreté optimale est remplie.

Selon une configuration possible, chaque piste peut par ailleurs comporter des moyens de mesure des dimensions du véhicule à laver, afin d'adapter le programme : la durée de certaines des positions de lavage peut ainsi par exemple être allongée, alors que la durée d'action à d'autre endroits peut être revue à la baisse. Cette détection dimensionnelle peut aussi avoir une incidence sur la durée globale de lavage, et par conséquent sur la tarification, et/ou sur la gestion des files d'attente.

De même, chaque piste peut comporter des moyens optiques de visualisation de la surface extérieure de l'ensemble du véhicule. Cette surface est préalablement scannée par des moyens de scannage, ce qui peut servir à la détection de portions dudit véhicule nécessitant un lavage particulier, ou à l'identification du véhicule via sa plaque d'immatriculation, en vue de connaître le modèle du véhicule et d'adapter le programme de lavage à sa configuration spécifique. La détection du modèle de véhicule peut d'ailleurs avoir une incidence sur le type de lavage approprié, par exemple s'il s'avère qu'il s'agit d'un véhicule électrique. Il est à noter que certaines adaptations des programmes de lavage ne dépendent pas de la détection de la surface ou du modèle du véhicule. L'adaptation peut être contextuelle ou circonstancielle : ainsi par exemple, l'été, on sait que le pare-brise est facilement sali par des insectes et doit être plus particulièrement traité.

Selon une autre possibilité encore, chaque piste peut comporter des moyens de comptage de la durée entamée ou résiduelle du programme sélectionné en cours. L'information, rendue disponible par exemple par des moyens de visualisation appropriés, permet par exemple aux utilisateurs en attente de choisir la piste qui se libérera le plus rapidement. Une telle option technique aboutit à maximiser l'efficacité économique d'une station de lavage.

L'invention concerne par ailleurs également un procédé de lavage d'un véhicule dans une installation de lavage telle que décrite auparavant, incluant :
- la validation du paiement de la prestation de lavage par l'utilisateur ;
- la détermination de l'actionnement des moyens de sélection du programme de lavage ;
- la mémorisation du programme sélectionné et des phases qu'il inclut ; et
- pour chaque phase du programme sélectionné, l'actionnement des moyens d'information correspondant à chaque phase.

En substance, lorsque l'installation de lavage reçoit l'information qu'un programme est sélectionné, elle mémorise cette information et démarre simultanément le programme de lavage du véhicule et la fourniture à l'utilisateur des informations qui lui permettent de se positionner correctement par rapport au véhicule, pendant la durée appropriée à chaque emplacement.

Le procédé comprend également l'actionnement des moyens d'illumination de l'ensemble du véhicule en fin de programme de lavage, comme on l'a mentionné auparavant, permettant de mettre en avant et de prouver, aux yeux de l'utilisateur, le résultat du lavage tel qu'optimisé dans le cadre de l'invention.

Secondairement, le procédé peut mettre en œuvre :
- la détection du véhicule sur la piste ;
- l'actionnement des moyens de mesure des dimensions du véhicule ; et
- l'adaptation de la durée de chaque phase du programme de lavage sélectionné en fonction des dimensions mesurées.

Comme mentionné auparavant en lien avec l'apparence de la surface extérieure du véhicule dans une perspective de lavage, le procédé peut aussi mettre en place les étapes suivantes :
- la détection du véhicule sur la piste ;
- l'actionnement des moyens optiques de visualisation de la surface extérieure de l'ensemble du véhicule ;
- le scannage par les moyens de gestion électronique de ladite surface extérieure ;
- la mémorisation de portions de surface nécessitant un lavage particulier ; et
- l'adaptation de la durée des phases du programme de lavage sélectionné en fonction des portions de surface nécessitant un lavage particulier.

Dans l'invention, cette adaptation de durée s'applique d'ailleurs aussi de manière plus générale, et peut n'être pas liée à une étape de détection, mais à un contexte ou à une situation prédéterminée, résultant par exemple des conditions météo liées à une saison. Comme évoqué, le nombre d'insectes s'écrasant sur un pare-brise en été peut ainsi conduire à une adaptation de la durée de son nettoyage, par exemple communiquée aux moyens d'informations sonores, et affectant la durée globale du programme.

D'autres buts et avantages de la présente invention apparaîtront au cours de la description qui va suivre, laquelle présente un mode préférentiel de réalisation de l'invention. Celui-ci n'est cependant donné qu'à titre d'exemple indicatif et non limitatif.

La compréhension de cette description sera en particulier facilitée en se référant aux dessins joints en annexe et dans lesquels :
La figure 1 représente une vue en perspective d'une piste de lavage selon la présente invention, occupée par un véhicule ;
La figure 2 montre la même piste de lavage sans le véhicule ;
La figure 3 reprend les éléments de la figure 1, avec la signalétique lumineuse indiquant à l'utilisateur le trajet lui permettant de se rendre à l'emplacement de positionnement prévu par le programme ; et
La figure 4 montre l'utilisateur placé à cet emplacement, pour une durée s'élevant à la durée d'illumination du dispositif lumineux placé à cet endroit de la piste.

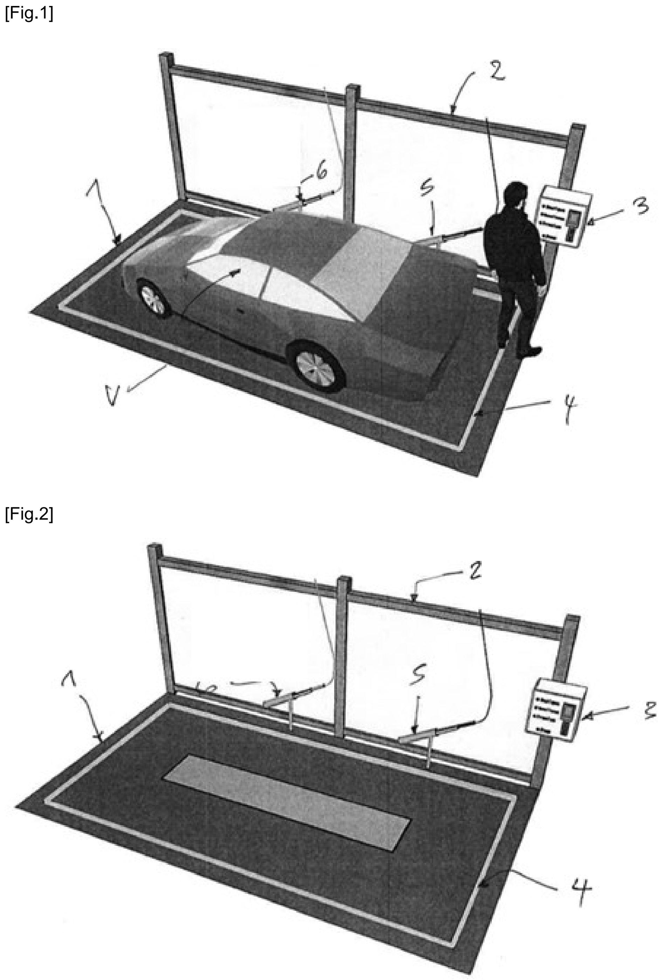

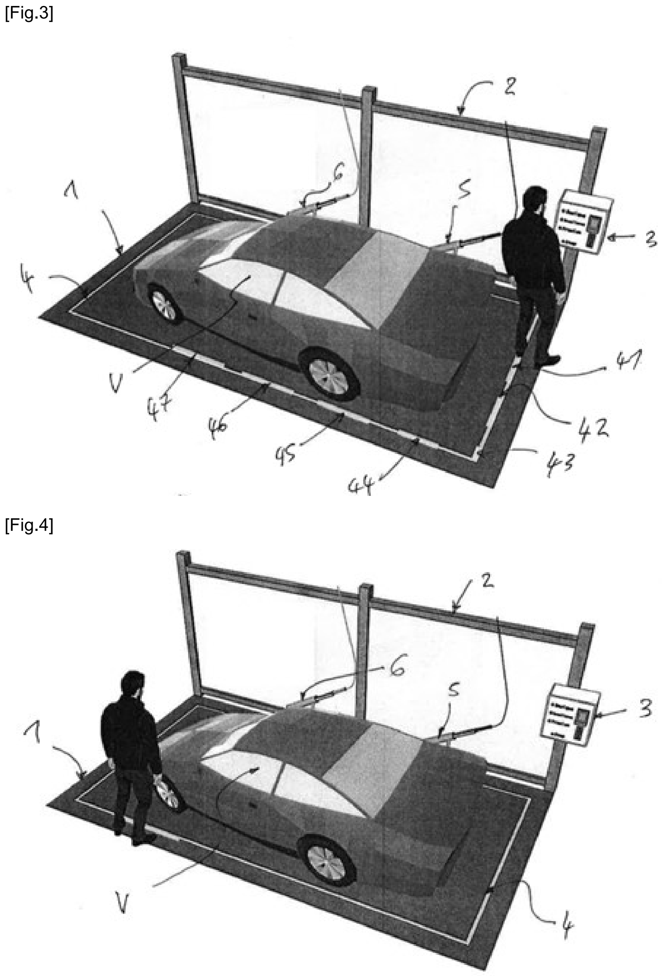

En référence à la figure 1, la piste 1 de lavage, occupée par un véhicule V, est limitée par une paroi 2 (les pistes 1 de lavage de telles installations disposent en général d'une seconde paroi qui délimite la piste 1 sur le côté opposé, mais elle n'est pas représentée sur la figure pour en améliorer la clarté) sur laquelle est fixé un coffret de commande 3. L'utilisateur se tient devant ce coffret 3, qui comporte des moyens de paiement et de sélection des programmes prédéterminés disponibles mis en œuvre dans le cadre de la présente invention. Le sol de la piste 1 comporte un tracé rectangulaire qui intègre en pratique les dispositifs lumineux 4 d'accompagnement de l'utilisateur (voir aux figures 3 et 4). Une première lance 5 de lavage dispensant de l'eau sous pression est installée à proximité de la paroi 2. Une seconde lance 6, par exemple prévue pour le lavage des jantes, est placée au voisinage de la première lance 5, également au pied de la paroi 2.

La figure 2 montre bien, en l'absence de véhicule V, la configuration particulière, nullement exclusive, qui est donnée aux dispositifs lumineux 4 de l'invention, qui sont répartis en périphérie du véhicule V lorsqu'il est présent, de manière à être visibles et accessibles à l'utilisateur au cours des phases de lavage. Le tracé rectangulaire est particulièrement adapté à délimiter la périphérie du véhicule V. Il est prévu suffisamment grand pour que des véhicules V de tailles diverses puissent s'y inscrire.

Lorsque l'utilisateur, comme représenté en figure 3, sélectionne - via un organe de commande du coffret 3 - un programme de lavage prédéterminé disponible sur la piste 1 de lavage sur laquelle il se trouve, après avoir payé la prestation également au niveau dudit coffret 3, des moyens d'informations lumineux 4 sont actionnés par le système. Dans un premier temps, par exemple, un trajet lumineux est dessiné dans le tracé en rectangle via des dispositifs lumineux individuels 41, 42, 43, 44, 45, 46, 47 distincts qui lui indiquent où il doit se rendre par rapport au véhicule V pour mettre en œuvre de manière attendue et correcte le programme de lavage choisi.

Puis, comme montré en figure 4, seul le dispositif lumineux 47, qui indique l'emplacement où il doit se tenir pendant la phase de lavage en cours, reste allumé. D'autres indications, par exemple vocales, peuvent alors par exemple lui être communiquées par le système, donnant des informations sur la direction dans laquelle pointer la lance, sur le déplacement ou le geste attendu, etc.

Les modalités de conception illustrées par les figures ne sont bien entendu pas exhaustives de l'invention, qui englobe au contraire des variantes de forme pour ses différents composants, par exemple sur le tracé des dispositifs lumineux 4, sur leur forme individuelle, etc.

## Revendications

1. Installation de lavage de véhicules (V) comportant au moins une piste de lavage (1) prévue pour recevoir un véhicule (V) et équipée d'au moins un coffret (3) présentant une interface utilisateur comportant des moyens de sélection d'un ou plusieurs programmes de lavage prédéterminés et des moyens de paiement de la prestation consistant en la mise en œuvre d'au moins un programme de lavage, chaque piste de lavage (1) présentant par ailleurs des moyens de lavage manuels du véhicule par l'utilisateur sous forme d'au moins une lance de lavage (5, 6) manipulable par l'utilisateur et délivrant un fluide sous pression, l'utilisateur se déplaçant autour du véhicule (V) en portant une lance (5, 6) qu'il dirige vers le véhicule (V), l'installation comportant en outre des moyens de gestion électronique au moins des moyens de sélection du programme de lavage, des moyens de paiements et des moyens de lavage, **caractérisée en ce que** chaque piste (1) comporte des moyens d'information du positionnement que doit prendre l'utilisateur, prévus pour le guider à chaque instant pour réaliser le programme de lavage complet sélectionné.

2. Installation de lavage de véhicules (V) selon la revendication précédente, **caractérisée en ce que** les moyens d'information du positionnement de l'utilisateur sont des dispositifs lumineux (4) répartis en périphérie du véhicule (V), reliés aux moyens de gestion électronique qui les pilotent unitairement.

3. Installation de lavage de véhicules (V) selon la revendication précédente, **caractérisée en ce que** les dispositifs lumineux (4) forment un trajet autour du véhicule (V).

4. Installation de lavage de véhicules (V) selon l'une des revendications 2 et 3, **caractérisée en ce que** les dispositifs lumineux (V) sont implantés dans le sol de la piste de lavage (1).

5. Installation de lavage de véhicules (V) selon la revendication précédente, **caractérisée en ce que** les dispositifs lumineux (4) dessinent dans le sol une forme rectangulaire continue divisée en segments lumineux (41, 42, 43, 44, 45, 46, 47) distincts.

6. Installation de lavage de véhicules (V) selon l'une des revendications précédentes, **caractérisée en ce que** les moyens d'information du positionnement de l'utilisateur sont des moyens sonores.

7. Installation de lavage de véhicules (V) selon la revendication précédente, **caractérisée en ce que** les moyens sonores comportent un générateur vocal.

8. Installation de lavage de véhicules (V) selon l'une des revendications précédentes, **caractérisée en ce que** chaque piste (1) comporte des moyens d'illumination de l'ensemble du véhicule (V).

9. Installation de lavage de véhicules (V) selon l'une des revendications précédentes, **caractérisée en ce que** chaque piste (1) comporte des moyens de mesure des dimensions du véhicule (V) à laver.

10. Installation de lavage de véhicules (V) selon l'une des revendications précédentes, **caractérisée en ce que** chaque piste (1) comporte des moyens optiques de visualisation de la surface extérieure de l'ensemble du véhicule (V).

11. Installation de lavage de véhicules (V) selon l'une des revendications précédentes, **caractérisée en ce que** chaque piste (1) comporte des moyens de comptage de la durée entamée ou résiduelle du programme sélectionné en cours.

12. Procédé de lavage d'un véhicule (V) dans une installation de lavage selon les revendications précédentes, **caractérisé par** :
- la validation du paiement de la prestation de lavage par l'utilisateur ;
- la détermination de l'actionnement des moyens de sélection du programme de lavage ;
- la mémorisation du programme sélectionné et des phases qu'il inclut ; et
- pour chaque phase du programme sélectionné, l'actionnement des moyens d'information correspondant à chaque phase du programme.

13. Procédé de lavage d'un véhicule (V) dans une installation de lavage selon la revendication précédente, **caractérisé par** l'actionnement des moyens d'illumination de l'ensemble du véhicule (V) en fin de programme de lavage.

14. Procédé de lavage d'un véhicule (V) dans une installation de lavage selon l'une des revendications 12 et 13, **caractérisé par** :
- la détection du véhicule (V) sur la piste (1) ;
- l'actionnement des moyens de mesure des dimensions du véhicule (V) ; et
- l'adaptation de la durée de chaque phase du programme de lavage sélectionné en fonction des dimensions mesurées.

15. Procédé de lavage d'un véhicule (V) dans une installation de lavage selon l'une des revendications 12 à 14, **caractérisé par** :
- la détection du véhicule (V) sur la piste (1) ;
- l'actionnement des moyens optiques de visualisation de la surface extérieure de l'ensemble du véhicule (V) ;
- le scannage par les moyens de gestion électronique de ladite surface extérieure ;
- la mémorisation de portions de surface nécessitant un lavage particulier ; et
- l'adaptation de la durée des phases du programme de lavage sélectionné en fonction des portions de surface nécessitant un lavage particulier.
